# EUROPÄISCHE PATENTSCHRIFT

(11) **EP 1 436 370 B1**
(45) Veröffentlichungstag und Bekanntmachung des Hinweises auf die Patenterteilung: **16.07.2014**
(21) Anmeldenummer: 02792720.1
(22) Anmeldetag: 16.10.2002
(51) Int. Cl.: C11B 7/00, A23D 9/00, A23L 1/30, A61K 31/23

(54) **VERFAHREN ZUR HERSTELLUNG VON NATIVEN PUFA-TRIGLYCERIDMISCHUNGEN MIT EINEM HOHEN GEHALT AN MEHRFACH UNGESAETTIGTEN FETTSAEUREN**
METHOD FOR PRODUCING MIXTURES OF TRIGLYCERIDES OF NATURAL POLYUNSATURATED FATTY ACIDS WITH HIGH POLYUNSATURATED FATTY ACID CONTENT
PROCEDE DE PRODUCTION DE MELANGES DE TRIGLYCERIDES DE PUFA NATURELS A TENEUR ELEVEE EN ACIDES GRAS POLYINSATURES

(30) Priorität: 19.10.2001 DE 10151155
(43) Veröffentlichungstag der Anmeldung: 14.07.2004
(73) Patentinhaber: Lonza Ltd, 4002 Basel (CH)
(72) Erfinder: FABRITIUS, Dirk, 55116 Mainz (DE)
(74) Vertreter: Mai, Dörr, Besier
(86) Internationale Anmeldenummer: PCT/EP2002/011534
(87) Internationale Veröffentlichungsnummer: WO 2003/033631

(56) Entgegenhaltungen:
- EP-A- 1 215 274
- WO-A-00/50547
- WO-A-93/25645
- US-A- 6 020 020
- TOR-CHERN CHEN AND YI-HSU JU: "Polyunsaturated Fatty Acid Concentrates from Borage and Linseed Oil Fatty Acids" JOURNAL OF THE AMERICAN OIL CHEMISTS' SOCIETY, Bd. 78, Nr. 5, 2001, Seiten 485-488, XP001145462
- DATABASE WPI Section Ch, Week 198420 Derwent Publications Ltd., London, GB; Class B05, AN 1984-123454 XP002231674 & JP 59 059644 A (KUREHA CHEM IND CO LTD), 5. April 1984 (1984-04-05)

## Beschreibung

Die vorliegende Erfindung betrifft ein Verfahren zur Herstellung natürlicher (nativer), mit hochungesättigten Fettsäuren angereicherten PUFA-Triglycerigmischungen (PUFAs=Polyunsaturated Fatty Acids) mit einem PUFA-Mindestgehalt von >55 Gew.-% TFA (Gesamtfettsäuregehalt; Total Fatty Acids), wobei diese zum allergrößten Teil aus Triglyceriden bestehen Diese werden durch Kältefällung (Winterisierung) in einem oder mehreren organischen Lösungsmitteln aus natürlichen (nativen) PUFA-Ölen mit >39 Gew.-% TFA PUFA-Gehalt gewonnen.

Hochungesättigte Fettsäuren stellen essentielle Fettsäuren für den menschlichen Organismus dar. PUFAs können in zwei große Gruppen unterteilt werden. Neben der Gruppe der ω-6 PUFAs, die ausgehend von Linolsäure (18:2) formuliert wird, gibt es die Gruppe der ω-3 PUFAs, die ausgehend von der α-Linolensäure (18:3) aufgebaut wird. PUFAs sind wichtige Bausteine der Zellmembranen, der Retina und der Hirnhaut und Vorläufer für wichtige Hormone, beispielsweise Prostaglandine, Thromboxane und Leukotriene.

Beispiele ernährungsphysiologisch wichtiger PUFAs sind in Tabelle 1 gezeigt:

**Tabelle 1:**

| **Bezeichnung** | **Kettenlänge und Zahl der C-C Doppelbindungen** | **Wichtigste Quellen** |
|---|---|---|
| *Omega-3-Fettsäuren* | | |
| α-Linolensäure (ALA) | C 18:3 | Leinöl, Sojaöl, Rapsöl |
| Stearidonsäure (SA) | C 18:4 | Mikrobiell erzeugte Öle, |
| Eicosapentaensäure (EPA) | C 20:5 | Seefische (Makrele, Lachs, Hering, Sardine, Thunfisch) |
| Docosapentaensäure (DPA) | C 22:5 | Seefische (Makrele, Lachs, Hering), Mikrobiell erzeugte Öle |
| Docosahexaensäure (DHA) | C 22:6 | Seefische, mikrobiell erzeugte Öle (Protisten) |
| *Omega-6-Fettsäuren* | | |
| γ-Linolensäure (GLA) | C 18:3 | Nachtkerzenöl, Borretschöl, Schwarze Johannisbeere |
| Arachidonsäure (ARA) | C 20:4 | Seefische, mikrobiell erzeugte Öle (*Mortierella*) |

Neben der Funktion als Bausteine konnte in den letzten Jahre gezeigt, daß PUFAs direkt vielfältige positive Wirkungen auf den menschlichen Organismus bzw. Erkrankungen haben.

Eine Vielzahl von klinischen Studien haben gezeigt, daß PUFAs bei z.B. Krebs, rheumatischer Arthritis, Bluthochdruck und Neurodermitis und vielen anderen Erkrankungen einen wichtigen Beitrag zur Heilung oder Linderung leisten können. Diese Erkenntnisse waren ursächlich dafür verantwortlich, daß internationale Institutionen und Behörden Empfehlungen ausgesprochen haben, die die tägliche Aufnahmemenge von PUFAs regeln.

PUFAs können vom Menschen nicht *de-novo* synthetisiert werden, da ihnen die Enzymsysteme fehlen, die eine C-C Doppelbindung in die Kohlenstoffkette an Positionen >C9 einführen können (fehlende Δ12-Desaturase). Erst durch die Zufuhr von sogenannten Vorläufer-Fettsäuren (Precursoren, z.B. α-Linolensäure) über die Nahrung ist der Mensch in der Lage, hochungesättigte Fettsäuren zu synthetisieren. Ob diese Menge jedoch ausreicht, um den Bedarf an hochungesättigten Fettsäuren zu decken, ist umstritten.

Der größte Teil der essentiellen Fettsäuren wird durch die Nahrung aufgenommen. Insbesondere Pflanzenöle sind angereichert mit ω-6 Fettsäuren (z. B. enthält Johannisbeere GLA, d.h. gamma-Linolensäure), jedoch sind diese Fettsäuren hier nur in einer Kettenlänge bis C 18 vertreten.

Fischöle enthalten ω-3 Fettsäuren (z.B. enthält Lachsöl bis zu 18 Gew.-% TFA EPA und 12 Gew.-% TFA DHA). Im Allgemeinen ist jedoch der Gehalt an der erwünschten PUFA gering und diese liegt in einer Mischung vor, wobei antagonistisch wirkende PUFAs ebenfalls enthalten sein können. Insbesondere in der Säuglingsernährung ist die EPA aufgrund ihrer blutungshemmenden und wachstumshemmenden Eigenschaften unerwünscht (M. Hamosh (1998). Longchain polymsaturated fatty acids: who needs them? Biochem. Soc. Trans., 26(2), 96-103*).* Hoch konzentrierte PUFA-Triglyceride aus Fischölen sind aufgrund der Triglycerid-Zusammensetzung natürliche Grenzen gesetzt. Der typische Gesamtgehalt an EPA und DHA aus Fischölen liegt bei ca. 10-25 Gew.-% TFA.

Durch die Vielzahl unterschiedlicher Fettsäuren und damit auch vielfältigen Triglyceridspezies liegen die maximal erreichbaren PUFA-Konzentrationen bei maximal 30 Gew.-% TFA.

Durch den Einsatz biokatalytischer Verfahren (Verwendung von Lipasen) gelingt eine Erhöhung der PUFA-Konzentration in Triglyceriden in den Bereich um 40 Gew.-% TFA DHA (Marinol D40® der Fa. Loders & Crocklaan, Wormerveer, Niederlande). Allerdings können so native Öle nicht hergestellt werden.

Ein ähnlicher Ansatzpunkt liegt in der Retrosynthese von PUFA-Triglyceriden oder Strukturlipiden. Hier werden mittels einer Lipase (spezifisch oder unspezifisch) ausgehend von reinen PUFAs hochreine PUFA-Triglyceride oder Strukturlipide hergestellt (G. G. Haraldsson, B. Ö. Gudmundsson und Ö. Almarsson (1995): The synthesis of homogenous triglycerides of eicosapentaenoic acid and docosahexaenoic acid by lipase. Tetrahedron, 51(3), 941-952*,* R. Irimescu, K. Hata, Y. Iwasaki und T. Yamane (2001): Comparision of acyl donors for lipase-catalyzed production of 1,3-Dicapryloyl-2-eicosapentaenoylglycerol. JAOCS, 78(1), 65-67*,* F.-C. Huang, Y.-H. Ju und J.-C Chiang (1999): γ-Linolenic acid-rich triacylglycerols derived from borrage oil via lipase-catalyzed reactions. JAOCS, 76(7), 833-837). Der hohe Preis reiner PUFAs läßt diesen Prozess allerdings als wenig sinnvoll erscheinen. In diesen Fällen liegen auch keine nativen Öle mehr vor.

Die Herstellung höher angereicherter PUFA-Konzentrate (>30 Gew.-% TFA EPA+DHA) in Form von nativen Triglyceriden stellt daher heute eine ungelöste Herausforderung dar *(*Haraldsson, G., G. (2000): Enrichement ofLipids with EPA and DHA by lipase. In Enzymes in Lipid Modification. Ed. U. Bornscheuer, Wiley VCH).

Auch die Herstellung höher konzentrierter PUFA-Triglyceridmischungen aus marinen Ölen ist schwierig *(*S.-B. Park, Y. Endo, K. Maruyama und K. Fujimoto (2000): Enzymatic synthesis of ethyl ester of highly unsaturated fatty acids from fish oils using immobilized lipase. Food Sci. Technol., 6(3), 192-195*).* Durch aufwendige chromatographische Verfahren oder Kurzwegdestillation lassen sich theoretisch Triglyceridfraktionen isolieren, die mit PUFAs hoch angereichert sind, wobei allerdings viele Probleme auftreten (W. M. Willis, R. W. Lencki und A. G. Marangoni (1998): Lipid modification strategies in the production of nutritionally functional fats and oils. Crit. Rev. Food Sci., 38(8), 639-674*,* Hayashi, K. and H. Kishimira (1996): Preparation and purification of DHA-enriched triacylglycerols from fish oils by column chromatography. Fisheries Science, 62(5), 842-843*).* Diese Verfahren sind teuer und aufwendig. Außerdem ist eine thermische Beanspruchung der oxidationslabilen PUFAs unerwünscht und führt zur Zersetzung der Produkte. In der Regel führen diese Verfahren daher zu nicht mehr nativen Ölen.

Deshalb werden für die Herstellung von PUFA-Konzentraten keine nativen Öle sondern Fettsäure- bzw. Estermischungen eingesetzt, die z.B. durch eine Fällung mit Harnstoff angereichert werden (S. P. J. N. Senanyake und F. Shahidi (2000): Concentration of docosahexaenoic acid (DHA) from algael oil via urea complexation. J. of Food Lipids, 7, 51-61*,* W. M. N. Ratnayake, B. Olsson, D. Matthews und R. G. Ackmann (1988): Preparation of omega-3 PUFA concentrates from fish oil via urea complexation. Fat. Sci. Technol., 10, 381-386). In diesen Fällen lassen sich ebenfalls sehr reine PUFA-Konzentrate herstellen. Die Fällung mit Harnstoff ist jedoch nicht für Triglyceride geeignet. Weiterhin hat die FDA von einer physiologisch bedenklichen Carbamatbildung (Krebserregende Substanzklasse) bei der Fällung mit Harnstoff berichtet (B. J. Canas (1999): Ethyl carbamate formation during urea complexation for fractionation of fatty acids. JAOCS, 76(4), 537).

Andere Autoren berichten von geringen Steigerungen der PUFA-Konzentration und schlechten Ausbeuten nach Prozessen wie der Trockenfraktionierung (dry fractionation; ohne Lösungsmittel) oder der Lösungsmittelkristallation (solvent Crystallization; spezifisch mit Aceton). Bimbo und Crowther erzielten eine Steigerung der DHA-Konzentration von 10 Gew.-% TFA auf 11 Gew.-% TFA und Lee *et al.* konnte eine Erhöhung der DHA/EPA-Konzentration von 30,4 Gew.-% TFA auf 35,3 Gew.-% TFA erreichen *(*A. P. Bimbo und J. B. Crowther (1991): Fish oils: processing beyond crude oil. Infofish International, 6, 20-25*,* K.-T. Lee und T. A. Foglia (2001): Fractionation of menhaden oil and partially hydrogenated menhaden oil: characterization of triacylglycerol fractions. JAOCS, 78(3), 297-303*).*

Mit einer Nominalmenge von einem DHA- oder EPA-Molekül pro Triglycerid ist eine Erhöhung der PUFA-Konzentration ohne Verwendung enzymatischer Verfahren oder Resynthese nicht praktikabel über eine Konzentration von 300 mg/g Öl. Eine EPA- oder DHA-Konzentration von 300 mg/g Öl zu erreichen ist nicht einfach (Ackmann, R. A. (1988): The year of the fish oils. Chemistry and Industry, 7, 139-145). Höhere Gehalte werden in der Regel nur in Form der Ethyl- oder Methylester angeboten, obwohl auch hier Gehalte einer Haupt-PUFA von größer 32,6 Gew.-% TFA nicht zu erreichen sind *(*Moffat, C. F., A. S. McGill, R. Hardy and R. A. Anderson (1993): The production of fish oils enriched in polyunsaturated fatty acid-containing triglycerides. JAOCS, 70(2), 133-138*).* Dabei wird ein aufwendiges Verfahren in Form einer Gefrierung mit flüssigem Stickstoff und anschließender Extraktion bei -60°C eingesetzt. Das Verfahren stellt in den Augen der Autoren eher eine Methode zur Abtrennung von festen Triglyceriden als eine Methode zur Herstellung hochangereicherter PUFA-Triglyceride dar. Flüssigstickstoff stellt dabei einen Gefahrstoff dar, der insbesondere technisch nicht einfach einzusetzen ist.

Erst durch den Einsatz von Mikroorganismen gelingt die Herstellung von nativen PUFA-Ölen, die höhere Konzentrationen an PUFAs enthalten als Fischöle oder *Pflanzenöle (*K. D. Mukherjee (1999): Production and use of microbial oils. Inform, 10(4), 308-313*).* So können diese Öle bis zu 40 Gew.-% TFA DHA, 30 Gew.-% TFA GLA oder 40 Gew.-% TFA ARA enthalten.

Für die Anwendung im Lebensmittelbereich, im klinischen Bereich und bei der Säuglingsernährung ist die Gabe von nativen mit PUFAs hoch angereicherten Triglyceriden erwünscht, da gezeigt wurde, das die Aufnahme von PUFAs in Form der Triglyceride besonders bevorzugt ist (G. G. Haraldsson und A. Thorerensen (1999): Preparation of phospholipids highly enriched with n-3 polyunsaturated fatty acids by lipase. JAOCS, 76(10), 1143-1149*,* K. Osada, K Takahashi und M. Hatano (1990): Hydrolysis and synthesis of icosapentaenoic acid-docosahexaenoic acid rich oil by lipase toyo. J. Jpn. Oil Chem. Soc., 1, 50-52). Der Einsatz freier Fettsäuren in der Ernährung ist dagegen ungeeignet. Insbesondere trifft dies auf die Säuglingsernährung zu, da PUFAs in der Muttermilch ebenfalls in Form nativer Triglyceridmischungen vorkommen (A. R. Medina, L. E. Cerdan, A. G. Gimenez, B. C. Paez, M. J. I. Gonzalez und E. M. Grima (1999): Lipase-catalyzed esterification of glycerol and polyunsaturated fatty acids from fish and microalgae oils. J. of Biotechnology, 70, 379-391).

Weiterhin stellt die täglich aufzunehmende PUFA-Menge ein Problem dar, da hohe Ölmengen (z.B. Fischöle) aufgenommen werden müssen. Insbesondere trifft das auf solche Patienten zu, die hohe Konzentrationen von PUFAs zu sich nehmen müssen (z.B. bei Cystischer Fibrose), da sich beim Verzehr hoher Mengen von Fischöl Nebenwirkungen einstellen können (Y. Kosugi und A. Azuma (1994): Synthesis of triacylglycerols from polyunsaturated fatty acid by immobilized lipase, JAOCS, 71(12), 1397-1403*).* Um eine möglichst gezielte Wirkung der einzelnen PUFAs zu erreichen, müssen angereicherte bzw. hochreine PUFAs eingesetzt werden. Es besteht daher im Stand der Technik ein hoher Bedarf an nativen Triglyceriden, die hoch angereichert mit PUFAs sind *(*Haraldsson, G., G. (2000): Enrichement of Lipids with EPA and DHA by lipase. In Enzymes in Lipid Modification. Ed. U. Bornscheuer, Wiley VCH).

Die seit langem bekannte Winterisierung (Kältefällung) stellt eine Methode dar, mit der Öle von Feststoffanteilen (Wachse, Fettalkohole, gesättigte Triglyceride) abgetrennt werden *(aus* Wolf Hamm und Richard J. Hamilton (2000): Edible oil processing, Chapter 4, Sheffield Academic Press*),* oder Öle mit definierten Schmelzpunkten herzustellen *(*S. Hashimoto, T. Nezu, H. Arakawa, T. Ito und S. Maruzeni (2001): Preparation of sharp-melting hard palm midfraction and ist use as hard butter in chocolate. JAOCS, 78(5), 455-460*).* In der Praxis stellt dieses Verfahren die Methode der Wahl dar, um aus Fetten Öle herzustellen.

Yokochi et al. (1990) JAOCS, 67(11), 846-851, beschreiben eine Winterisierung zur Erhöhung der GLA-Konzentration ausgehend von einem Öl, das durch Fermentation mit *Mortierella ramanniana* hergestellt wurde. Yokochi *et al.* erreichen jedoch bei weitem nicht die PUFA-Konzentrationen, die mit Hilfe der vorliegenden Erfindung erreicht werden können. Es wurden lediglich GLA-Konzentrationen von 10,5 Gew.-% TFA (GLA-Ausgangskonzentration 5,7 Gew.- % TFA) erreicht. Dabei wurden z.T. lebensmittelrechtlich nicht zugelassene Lösungsmittel verwendet (Petrolether).

Leinöl enthält bis zu 62 Gew.-% TFA α-Linolensäure (18:3). Es ist keine andere natürliche Zusammensetzung bekannt, in der eine andere PUFA, insbesondere DHA und/oder EPA in so hoher Konzentration in Form von Triglyceriden vorkommt. Insbesondere sind aber auch andere PUFAs wie DHA und/oder EPA besonders gesundheitsfördernd. Diese PUFAs besitzen mehr als 3 C-C Doppelbindungen. Ein weiteres Winterisierungsverfahren ist aus JP 59 059 644 bekannt.

Daher besteht im Stand der Technik noch immer ein sehr großer Bedarf nach solchen Zusammensetzungen, die native PUFA-Triglyceride in hohen Konzentrationen enthalten. Besonders hoher Bedarf besteht für folgende PUFAs: Stearidonsäure (SA), Eicosapentaensäure (EPA), Docosapentaensäure (DPA), Docosahexaensäure (DHA), γ-Linolensäure (GLA) sowie Arachidonsäure (ARA). Ganz besonders hoch ist der Bedarf an Eicosapentaensäure (EPA), Docosahexaensäure (DHA) und γ-Linolensäure (GLA).

Angesichts des genannten Stands der Technik lag der vorliegenden Erfindung daher die Aufgabe zugrunde, ein Verfahren zum Gewinnen von nativen, hoch konzentrierten PUFA-Triglycerid-Mischungenn aus niedriger konzentrierten PUFA-Ölen zur Verfügung zu stellen, wobei Zusammensetzung (PUFA-Triglycerid-Mischungen) enthaltend Stearidonsäure (SA), Eicosapentaensäure (EPA), Docosapentaensäure (DPA), Docosahexaensäure (DHA), γ-Linolensäure (GLA) sowie Arachidonsäure (ARA) bevorzugt hergestellt werden. Besonders bevorzugt sollen mit dem erfindungsgemäßen Verfahren Zusammenstzungen mit erhöhtem Gehalt an Eicosapentaensäure (EPA), Docoshexaensäure (DHA) und γ-Linolensäure (GLA) hergestellt werden können.

Insbesondere sollen auch gerade solche Zusammensetzungen (PUFA-Triglycerid-Mischungen) zur Verfügung gestellt werden, die angereichert sind an PUFAs mit 4 oder mehr C-C Doppelbindungen.

Der natürliche (native) Charakter der Triglyceride soll dabei erhalten bleiben. Der erreichbare Gesamt-PUFA-Gehalt soll in jedem Fall >55 Gew.-% TFA sein. Bevorzugt sollen dabei die erhaltenen Triglyceridmischungen besonders geeignet für die Verwendung im Lebensmittelbereich oder in der Pharmakologie sein. Daher sollen bevorzugt nur solche Lösungsmittel Verwendung finden, die in der Richtlinie (88/344/EWG) des Rates der Europäischen Union vom 13. Juni 1998 ausdrücklich genannt und für den Lebensmittelbereich zugelassen sind. Andere Lösungsmittel können für die Lösung dieser Aufgabe jedoch auch geeignet sein.

Gelöst werden diese sowie weitere, nicht explizit genannten Aufgaben, die jedoch aus den hierin einleitend diskutierten Zusammenhängen ohne weiteres ableitbar oder erschließbar sind, durch ein Verfahren nach Patentanspruch 1. Zweckmäßige Abwandlungen des erfindungsgemäßen Verfahrens werden in den auf Anspruch 1 rückbezogenen Unteransprüchen unter Schutz gestellt.

Dadurch, daß man
(i) ein PUFA-Öl mit einem Triglyceridgehalt von >85 Gew.-% und mit einem PUFA-Gehalt von >39 Gew.-% TFA in einem organischen Lösungsmittel oder einer Mischung von Lösungsmitteln löst,
(ii) die Mischung bei einer bestimmten Temperatur für eine bestimmte Zeit stehen läßt,
(iii) die Mischung in einen die aufkonzentrierte PUFA-Triglyceridmischungen enthaltenden Überstand (Hauptprodukt) und eine Sedimentphase (Nebenprodukt) trennt, und
(iv) das Lösungsmittel aus dem die hoch konzentrierten PUFA-Triglyceride enthaltenden Hauptprodukt wieder entfernt,
kann man nämlich die erfindungsgemäße Aufgabe erstaunlich einfach lösen.

Für die Zwecke der vorliegenden Erfindung bedeuted "native Triglyceridmischungen" immer das Produkt des erfindungsgemäßen Verfahrens. In das Verfahren eingesetzt werden als Edukte immer native PUFA-Öle.

Für die Zwecke der vorliegenden Erfindung wird unter einem PUFA-Öl verstanden: Zusammensetzungen mit einem Triglycerid-Gehalt von mindestens 85 Gew.-%, bevorzugt mindestens 90 Gew.-%, besonders bevorzugt mindestens 95 Gew.-%, bezogen auf das Gesamtgewicht der Zusammensetzung (des PUFA-Öls) und mit einem Gesamt PUFA-Gehalt > 39 Gew.-%, bezogen auf die Gesamtfettsäuren (TFA). Der Begriff Öl soll erfindungsgemäß auch solche Mischungen umfassen, die wegen ihrer Konsistenz normalerweise nicht den Ölen zugeordnet werden, z.B. Wachse und Fette. Diese PUFA-Öle können beispielsweise aus Mikroorganismen stammen, oder Fischöle und Pflanzenöle wie z.B. DHA-Öle aus *Crypthecodinium, Schizochytrium, Thraustochytrium, Ulkenia* und ARA-haltige Öle aus *Mortierella* und *Porphyridium,* EPA-haltige Öle aus *Chlorella,* GLA-Öle aus gentechnisch modifiziertem Raps, sowie weitere entsprechende Zusammensetzungen sein. Besonders bevorzugt werden erfindungsgemäß mikrobielle erzeugte Öle eingesetzt. Ebenfalls gut geeignet sind Öle aus gentechnisch veränderten Pflanzen. Als geeignet haben sich ferner Fisch- und Pflanzenöle erwiesen.

Daher ist klar, daß PUFA-Öle erfindungsgemäß neben Triglyceriden auch beispielsweise geringe Anteile Diglyceride oder freie Fettsäuren enthalten können, sowie aus natürlichen, unter Umständen gentechnisch veränderten Quellen stammen, so daß immer davon ausgegangen werden muß, daß ein geringer Anteil an Verunreinigungen vorliegt. Nicht als native PUFA-Öle angesehen werden für die Zwecke der vorliegenden Erfindung solche PUFA-Öle, in denen die Triglyceride z.B. durch Resynthese mittels Lipasen hergestellt wurden.

Nativ bedeutet daher für die Zwecke vorliegender Erfindung nicht durch chemische oder biokatalytische Modifikation hergestellt.

Im Unterschied zu den oben genannten Methoden wird durch das erfindungsgemäße Verfahren immer ein Gesamt-PUFA-Gehalt von >55 Gew.-% TFA erreicht. Durch dieses Verfahren lassen sich ebenfalls bisher nicht erreichbare Gesamt-PUFA-Gehalte >60 Gew.-% TFA, bevorzugt >70 Gew.-% TFA, besonders bevorzugt >80 Gew.-% TFA und ganz besonders bevorzugt >90 Gew.-% TFA erzielen. Die Produkte fallen erfindungsgemäß immer als native Triglyceridmischungen an und nicht als freie Fettsäuren oder andere Ester. Diese nativen Triglyceridmischungen stellen daher bevorzugte Ausführungsformen der vorliegenden Erfindung dar.

Besonders bevorzugt sind höher konzentrierte Mischungen. Gesamt-PUFA-Gehalt bedeutet für die Zwecke der vorliegenden Erfindung die Summe der Konzentrationen mindestens zweier PUFAs, ausgewählt aus der folgenden Gruppe: Stearidonsäure (SA), Eicosapentaensäure (EPA), Docosapentaensäure (DPA), Docosahexaensäure (DHA), γ-Linolensäure (GLA) sowie Arachidonsäure (ARA), besonders bevorzugt sollen in dem Gemisch Eicosapentaensäure (EPA), Docosahexaensäure (DHA) und γ-Linolensäure (GLA) enthalten sein.

In der Zusammenstzung können daher auch noch weitere, nicht ausdrücklich genannte PUFAs vorhanden sein. Diese weiteren PUFAs finden jedoch keine Beachtung bei der Berechnung des Gesamt-PUFA-Gehaltes.

Dieser erfindungsgemäß definierte Gesamt-PUFA-Gehalt wird daher auch als Ziel-PUFA-Gehalt bezeichnet.

Erfindungsgemäß geeignete Lösungsmittel sind Ethanol, und das Gemisch n-Hexan/Ethanol. Die besten Ergebnisse wurden mit n-Hexan/Ethanol, wobei das Verhältnis der Volumenprozente der beiden Lösungsmittel bezogen auf das Gemisch, unter der Voraussetzung, daß die Summe der Volumenprozente immer den Wert 100 erreicht, von 5:90 bis <20:>80 reichen kann, erzielt, so daß solche Lösungsmittelmischungen in der vorliegenden Erfindung ganz besonders bevorzugt eingesetzt werden.

Die Temperatur der Stufe (ii) des obigen Verfahrens kann je nach eingesetztem Ausgangsgemisch stark variieren. Günstig ist der Bereich von -50°C bis -100°C. Allgemein sind insbesondere sehr tiefe Temperaturen günstig, wobei der Bereich von -85°C bis -100°C besonders günstig ist. Selbstverständlich können auch noch tiefere Temperaturen verwendet werden, doch sind diese zumeist wegen der erhöhten Energiekosten unwirtschaftlich.

Die Stufe (ii) wird erfindungsgemäß für mindestens 5 Minuten durchgeführt und kann bis zu 18 Stunden durchgeführt werden. Besonders bevorzugt wird die Stufe (ii) für 5 bis 120 min durchgeführt, noch mehr bevorzugt für 10 min bis 100 min, und ganz besonders bevorzugt für 30 min - 60 min.

Zur Trennung von Hauptprodukt und Nebenprodukt aus Stufe (iii) können Zentrifugation, Filtration und Trockeneisfiltration eingesetzt werden.

Zur Abtrennung des festen Fettanteils vom flüssigen Öl können alle gängigen Trennverfahren Verwendung finden, die die unterschiedliche Dichte der zu trennenden Phasen nutzen. So kann neben der Zentrifugation die Separation oder auch der Dekanter Verwendung finden. Die Zentrifugation wird bevorzugt bei 3000-4000 g durchgeführt. Werte von 1000-2000 g sind ebenfalls geeignet.

Bei der Filtration lassen sich gängige Filtrationsverfahren, wie z.B. Papierfilter, Membranfilter sowie Membranfilterpressen mit und ohne Druck einsetzen.

Besonders bevorzugt wird die Filtration über einen Blaubandfilter ohne Vakuum durchgeführt. Um eine ausreichende Kühlung zu gewährleisten, wird der Filter mit Trockeneis ausgelegt und das zu filtrierende Material ebenfalls mit festem Kohlendioxid versetzt. So konnte eine Kühlung auf -65°C gewährleistet werden. In allen Fällen ist für eine ausreichende Kühlung (je nach Öl) zu sorgen.

Zum Entfernen der Lösungsmittel eignet sich jedes übliche Verfahren zum Abtrennen von Lösungsmitteln im Vakuum, wie z.B. die Verwendung von Rotationsverdampfern, Destillationsanlagen oder Verfahren ohne Vakuum, wie z.B. Abblasen der Lösungsmittel mit Inertgasen.

Unter einem weiteren Gesichtspunkt der vorliegenden Erfindung enthalten erfindungsgemäß bevorzugte PUFAs immer mindestens 4 C-C Doppelbindungen, bevorzugt mindestens 5, besonders bevorzugt mindestens 6 C-C Doppelbindungen.

### Abkürzungsverzeichnis:

- ALA: alpha-Linolensäure
- ARA: Arachidonsäure
- DHA: Docosahexaensäure
- DPA: Docosapentaensäure
- EPA: Eicosapentaensäure
- GLA: gamma-Linolensäure
- PUFA: Polyunsaturated Fatty Acid
- SA: Stearidonsäure
- TFA: Gesamtfettsäuregehalt (total fatty acids)
- w/w: Gewichtsteil/Gewichtsteil
- v/v: Volumenteil/Volumenteil
- Gew.-%: Gewichtsprozent
- Gew.-%: TFA Gewichtsprozent bezogen auf Gesamtfettsäuregehalt (Total Fatty Acids)

Die folgenden Beispiele erläutern die Erfindung näher.

### Beispiel 1: Herstellung eines nativen Triglyceridmischungens mit einem DHA-Gehalt (Haupt-PUFA-Gehalt) von >55 Gew.-% TFA und einem Gesamt-PUFA-Gehalt von 58 Gew.-% TFA

Kommerziell erhältliches DHASCO® der Fa. Martek Biosciences Corporation® (Columbia, Maryland, USA) wurde verwendet. Der DHA-Gehalt des Ausgangsmischungens liegt bei 45,1 Gew.-% TFA (Herstellerangabe 42,8 Gew.- % TFA).

Es werden 1,0 g Öl in 40 ml n-Hexan/Ethanol (20:80; v:v) gelöst (ca. 2,9 Gew.- %,) und für 8 h bei -85°C eingefroren. Anschließend wird bei 0°C für 2 Minuten bei 3600 U/min abzentrifugiert und der Überstand mit einer Pasteurpipette abgenommen. Nach Entfernen der Lösungsmittel am Rotationsverdampfer erhält man 377,1 mg eines klaren gelben Öls. Des weiteren fällt ein klares gelbes Öl als Rückstand an (632,7 mg). Die GC-Analyse ergab für die Produktfraktion einen DHA-Gehalt von 57,5 % und für den Rückstand einen DHA-Gehalt von 38,2 %. Der DHA-Aufkonzentrierungsfaktor beträgt 1,3.

Die Analyse der Öle erfolgt nach Umesterung durch allgemein bekannte Methoden in die Methylester und anschließender gaschromatographischer Analyse (Hewlett-Packard GC6890, Säule: Macherey & Nagel FFAP Permabond 0,1 µm (25m, 0,25mm), Splitbetrieb (10:1), Trägergas: Helium (constant flow 1,0 ml/min), FID-Betrieb mit Wasserstoff (30 ml/min) und Sauerstoff (300 ml/min) als Brenngase, Make up: 20 ml Helium, Detektor- und Injektortemperatur: jeweils 255° C, GC-Ofen-Temperaturprogramm: Anfangstemperatur 160° C, Haltephase 12 Minuten isotherm, Temperaturanstiegsrate 10° C/min auf Endtemperatur 230° C, diese für 5 min halten, Injektionsvolumen: 1,0 µl). Durch Zugabe eines internen Standards zum Reaktionsansatz kann eine quantitative Analyse durchgeführt werden.

### Beispiel 2: Herstellung eines nativen Triglyceridmischungens mit einem DHA-Gehalt (Haupt-PUFA-Gehalt) von >60 Gew.-% TFA und einem Gesamt-PUFA-Gehalt von 79,5 Gew.-% TFA nicht erfindungsgemäß

Ein wie in Yokochi et al., Appl. Microb. Biotechnol., (1998) 49, S. 72-76 beschrieben hergestelltes Öl wurde verwendet. Kultiviert wurde mit Glyzerin als Kohlenstoffquelle. Der DHA-Gehalt des Ausgangsmischungens lag bei 47,0 Gew.-% TFA. Der DPA-Gehalt lag bei 13,4 Gew.-% TFA.

Es werden 1,0 g Öl in 40 ml n-Hexan/Aceton (10:90; v:v) gelöst (ca. 2,8 Gew.-%) und für 3 h bei -85°C eingefroren. Anschließend wird bei 0°C für 2 Minuten bei 3600 U/min abzentrifugiert und der Überstand mit einer Pasteurpipette abgenommen. Nach Entfernen der Lösungsmittel erhält man 537,3 mg eines klaren gelben Öls. Des weiteren fällt ein trübes gelbes Öl als Rückstand an (472,0 mg). Die GC-Analyse ergab für die Produktfraktion einen DHA-Gehalt von 64,0 Gew.-% TFA und für den Rückstand einen DHA-Gehalt von 34,3 Gew.-% TFA. Der DPA-Gehalt in der Produktfraktion lag bei 15,5 Gew.-% TFA. Der DHA-Aufkonzentrierungsfaktor beträgt 1,3.

### Beispiel 3: Herstellung eines nativen Triglyceridmischungens mit einem DHA-Gehalt (Haupt-PUFA-Gehalt) von >70 Gew.-% TFA und einem Gesamt-PUFA-Gehalt von 85,3 Gew.-% TFA

Ein wie in Yokochi et al., Appl. Microb. Biotechnol., (1998) 49, S. 72-76 beschrieben hergestelltes Öl wurde verwendet. Kultiviert wurde mit Glyzerin als Kohlenstoffquelle. Der DHA-Gehalt des Ausgangsmischungens liegt bei 46,4 % der Gesamtfettsäuren. Der DPA-Anteil betrug 11,3 Gew.-% TFA.

Es werden 3,8 g Öl in 100 ml n-Hexan/Ethanol (10:90; v:v) gelöst (ca. 3,8 Gew.- %) und für 8 h bei -85°C eingefroren. Anschließend wird bei 0°C für 2 Minuten bei 3600 U/min abzentrifugiert und der Überstand mit einer Pasteurpipette abgenommen. Nach Entfernen der Lösungsmittel erhält man 174,9 mg eines klaren gelben Öls. Des weiteren fällt ein trübes gelbes Öl als Rückstand an (3,62 g). Die GC-Analyse ergab für die Produktfraktion einen DHA-Gehalt von 70,1 Gew.-% TFA und für den Rückstand einen DHA-Gehalt von 44,4 Gew.-% TFA. Der DPA-Anteil in der Produktfraktion betrug 15,2 Gew.-% TFA. Der Aufreinigungsfaktor für DHA beträgt 1,5.

### Beispiel 4: Einfluß der Lösungsmittel auf die Produktkonzentration

Ein wie in Yokochi et al., Appl. Microb. Biotechnol., (1998) 49, S. 72-76 beschrieben hergestelltes Öl wurde verwendet. Kultiviert wurde mit Glyzerin als Kohlenstoffquelle. Der DHA-Gehalt des Ausgangsmischungens liegt bei 47,0 % der Gesamtfettsäuren.

Es werden jeweils 1,0 g Öl in 40 ml der folgenden Lösungsmittel gelöst: Aceton, Ethanol, Isopropanol, n-Hexan/Ethanol (30:70; v:v) gelöst (ca. 2,5 Gew.-% Öl bezogen auf das Lösungsmittel) und für 17 h bei -85 °C eingefroren. Anschließend wird bei 0°C für 2 Minuten bei 3600 g abzentrifugiert und der Überstand mit einer Pasteurpipette abgenommen. Nach Entfernen der Lösungsmittel erhält man klare gelbe Öle. Des weiteren fällt ein trübes gelbes Öl als Rückstand an. Die Ergebnisse der Analysen der Überstände gibt Tabelle 2 wieder. Es ist deutlich zu erkennen, daß das eingesetzte Lösungsmittel einen starken Einfluß auf das Versuchsergebnis hat. In diesem Fall eignet sich für die Herstellung eines 60%-igen DHA-Öls bevorzugt eine Lösungsmittelgemisch Ethanol:n-Hexan (70:30, v/v) und für die Herstellung eines 68%-igen DHA-Öls reines Ethanol als Lösungsmittel.

**Tabelle 2: Ergebnisse der Überstandsanalysen der Kältefällungen mit verschiedenen Lösungsmitteln**

| | Ausgangsöl | 2,5% Öl in Aceton | 2,5% Öl in Isopropanol | 2,5% Öl in Ethanol erfindungsgemäß | 2,5% Öl in Ethanol/Hexa n (70:30, v:v) |
|---|---|---|---|---|---|
| DHA Area-% | 47,0% | 63,8% | 61,7% | 68,8% | 59,9% |
| DHA Ausbeute [%] | 100,0% | 67,4% | 11,5% | 17,2% | 78,8% |

## Patentansprüche

1. Verfahren zur Herstellung von konzentrierten PUFA-Triglyceridmischungen, wobei man
(i) ein natives PUFA-Öl mit einem Triglyceridgehalt von >85 Gew.-%, bezogen auf das Gesamtgewicht der Mischung, und mit einem Gesamt-PUFA-Gehalt von >39 Gew.-%, bezogen auf den Gesamtfettsäuregehalt, in einem organischen Lösungsmittel oder einem organischen Lösungsmittelgemisch löst, wobei 1-10 Gew.-% natives Öl bezogen auf das Gewicht des Lösungsmittels bzw. Lösungsmittelmischungens, eingesetzt werden,
(ii) das Gemisch bei einer Temperatur von -50°C bis -100°C für eine Dauer von mehr als fünf Minuten stehen lässt,
(iii) die Mischung in einen die konzentrierte PUFA-Triglyceridmischung darstellenden Überstand (Hauptprodukt) und eine Sedimentphase (Nebenprodukt) trennt, und
(iv) das Lösungsmittel bzw. Lösungsmittelgemisch nach dem Abtrennen der Sedimentphase von dem Hauptprodukt entfernt,
wobei das Lösungsmittel bzw. das Lösungsmittelgemisch ausgewählt ist aus der Gruppe bestehend aus: Ethanol und n-Hexan/Ethanol-Mischungen, wobei das Verhältnis der Volumenprozente der beiden Lösungsmittel bezogen auf das Gemisch,
unter der Voraussetzung, dass die Summe der Volumenprozente immer den Wert 100 erreicht, von 5:90 bis <20:>80 reichen kann, und
wobei die konzentrierte PUFA-Triglyceridmischung Docosahexaensäure (DHA)-Reste umfasst.

2. Verfahren nach Anspruch 1, wobei die Dauer der Stufe (ii) 5 bis 120 min beträgt.

3. Verfahren nach einem der vorstehenden Ansprüche, wobei die Temperatur der Stufe (ii) -85°C bis -100°C beträgt

4. Verfahren nach einem der vorstehenden Ansprüche, worin die Trennung der Stufe (iii) durch Zentrifugation durchgeführt wird.

5. Verfahren nach Anspruch 4, wobei die Zentrifugation bei > 1000 g für 2 bis 60 Minuten durchgeführt wird.

6. Verfahren nach einem der vorstehenden Ansprüche, worin die Trennung der Stufe (üi) durch Filtration durchgeführt wird.

7. Verfahren nach Anspruch 6, wobei die Filtration auf Trockeneis bei einer Temperatur tiefer als -60°C durchgeführt wird.

8. Verfahren nach einem der vorstehenden Ansprüche, wobei als PUFA-Öl ein Gemisch ausgewählt wird aus der Gruppe bestehend aus: native PUFA-Öle aus Mikroorganismen, Fischölen und Pflanzenölen

## Claims

1. A method for producing concentrated PUFA triglyceride mixtures, wherein
(i) a native PUFA oil having a triglyceride content of >85 % by weight, in relation to the total weight of the mixture, and having a total PUFA content of >39 % by weight, in relation to the total fatty acid content, is dissolved in an organic solvent or an organic solvent mixture, wherein 1-10 % by weight of native oil, in relation to the weight of the solvent or solvent mixture, are used,
(ii) the mixture is left to stand at a temperature from -50 °C to -100 °C for a period of more than five minutes,
(iii) the mixture is separated into a supernatant representing the concentrated PUFA triglyceride mixture (primary product) and a sediment phase (secondary phase), and
(iv) the solvent or solvent mixture is removed after separation of the sediment phase from the primary product,
wherein the solvent or the solvent mixture is selected from the group consisting of: ethanol and n-hexane/ethanol mixtures, wherein the ratio of the percentages by volume of the two solvents in relation to the mixture, under the precondition that the sum of the percentages by volume always reaches the value 100, may range from 5:90 to <20:>80, and
wherein the concentrated PUFA triglyceride mixture comprises docosahexaenoic acid (DHA) residues.

2. The method according to Claim 1, wherein step (ii) lasts from 5 to 120 min.

3. The method according to one of the preceding claims, wherein the temperature of step (ii) is -85 °C to -100 °C.

4. The method according to one of the preceding claims, wherein the separation of step (iii) is performed by centrifugation.

5. The method according to Claim 4, wherein the centrifugation is performed at >1000 g for 2 to 60 minutes.

6. The method according to one of the preceding claims, wherein the separation of step (iii) is performed by filtration.

7. The method according to Claim 6, wherein the filtration is performed on dry ice at a temperature lower than -60 °C.

8. The method according to one of the preceding claims, wherein, as PUFA oil, a mixture is selected from the group consisting of: native PUFA oils from microorganisms, fish oils and vegetable oils.

## Revendications

1. Procédé de production de mélanges concentrés d'AGPI et de triglycérides, lors duquel on
(i) dissout une huile d'AGPI vierge avec une teneur en triglycérides de > 85 % en poids par rapport au poids total du mélange et une teneur totale en AGPI de > 39 % en poids par rapport à la teneur totale en acide gras dans un solvant organique ou un mélange de solvant organique, 1 à 10 % en poids d'huile vierge étant utilisé par rapport au poids du solvant ou du mélange de solvants,
(ii) laisse reposer le mélange à une température comprise entre - 50 °C et - 100 °C pour une durée de plus de cinq minutes,
(iii) sépare le mélange en un état représentant le mélange concentré d'AGPI et de triglycérides (produit principal) et en une phase de sédimentation (sous-produit), et
(iv) retire le solvant ou mélange de solvants après la séparation de la phase de sédimentation du produit principal,
le solvant ou mélange de solvants étant sélectionné parmi le groupe composé de : éthanol et mélanges de n-hexane/éthanol, le rapport des pourcentages volumiques des deux solvants par rapport au mélange pouvant être compris, à la condition que la somme des pourcentages volumiques soit toujours de 100, entre 5:90 et <20:>80, et le mélange concentré d'AGPI et de triglycérides comprenant des restes d'acide docosahexaénoïque (DHA).

2. Procédé selon la revendication 1, lors duquel la durée de l'étape (ii) est de 5 à 120 minutes.

3. Procédé selon l'une des revendications précédentes, lors duquel la température à l'étape (ii) est comprise entre - 85 °C et - 100 °C.

4. Procédé selon l'une des revendications précédentes dans lequel la séparation à l'étape (iii) est réalisée par centrifugation.

5. Procédé selon la revendication 4, lors duquel la centrifugation est réalisée à > 1000 g pendant 2 à 60 minutes.

6. Procédé selon l'une des revendications précédentes dans lequel la séparation à l'étape (iii) est réalisée par filtration.

7. Procédé selon la revendication 6, lors duquel la filtration est réalisée sur glace carbonique à une température inférieure à -60 °C.

8. Procédé selon l'une des revendications précédentes, lors duquel en tant qu'huile d'AGPI, un mélange est sélectionné parmi le groupe consistant de : huiles AGPI vierges composée de micro-organismes, huiles de poisson et de plantes.
